# EUROPÄISCHE PATENTSCHRIFT

(11) **EP 2 951 255 B1**
(45) Veröffentlichungstag und Bekanntmachung des Hinweises auf die Patenterteilung: **14.03.2018**
(21) Anmeldenummer: 14704098.4
(22) Anmeldetag: 29.01.2014
(51) Int. Cl.: C09J 177/02, C09J 177/06, C09J 163/00, C09J 175/04, B32B 15/08, B32B 7/12, C09J 5/06, C08G 59/40, C08G 59/62, C08G 18/80

(54) **HAFTVERMITTLER- UND PRIMER-ZUSAMMENSETZUNGEN FÜR METALL-KUNSTSTOFF-HYBRIDBAUTEILE**
ADHESION PROMOTER COMPOSITIONS AND PRIMER COMPOSITIONS FOR METAL-PLASTIC HYBRID COMPONENTS
COMPOSITIONS DE PROMOTEURS D'ADHÉSION ET D'AMORCES POUR ÉLÉMENTS STRUCTURAUX HYBRIDES MÉTAL-PLASTIQUE

(30) Priorität: 29.01.2013 DE 102013201392
(43) Veröffentlichungstag der Anmeldung: 09.12.2015
(73) Patentinhaber: Evonik Degussa GmbH, 45128 Essen (DE); SI-Coatings GmbH, 42279 Wuppertal (DE)
(72) Erfinder: HENKENJOHANN, Willi, 42369 Wuppertal (DE); KUHMANN, Karl, 48249 Dülmen (DE); GRUHN, Maximilian, 45770 Marl (DE); PAWLIK, Andreas, 45657 Recklinghausen (DE); RISTHAUS, Martin, 59399 Olfen (DE); WELSCH, Klaus, 58339 Breckerfeld (DE); MANG, Sven, 58093 Hagen (DE)
(86) Internationale Anmeldenummer: PCT/EP2014/051695
(87) Internationale Veröffentlichungsnummer: WO 2014/118213

(56) Entgegenhaltungen:
- EP-A1- 1 504 892
- DE-A1- 2 550 803
- DE-A1-102008 046 871
- GB-A- 1 266 688
- US-A- 4 173 290

## Beschreibung

Die vorliegende Erfindung betrifft eine Haftvermittler- und eine Primer-Zusammensetzung sowie ihre Verwendung, eine Beschichtung und ihre Verwendung, Hybridbauteile, Verfahren zu ihrer Herstellung sowie ein Metallsubstrat.

Metall-Kunststoff-Hybridbauteile (auch Strukturbauteile) sind Verbunde der beiden Werkstoffe Metall und Kunststoff. Sie können durch das Spritzgießverfahren erhalten werden.

Hybridbauteile sind Komponenten, die unter anderem im Fahrzeugbau und im Flugzeugbau sowie in der Elektronik und der Elektrotechnik im Bereich tragender Teile, kraftaufnehmender Teile oder als Teil des Gehäuses, bspw. für dekorative Zwecke, zum Einsatz kommen. Die Hybridbauteile sind meistens Komponenten mit untergeordneten Sichtanforderungen, die im Fahrzeugbau sowie im Flugzeugbau im Bereich tragender Teile sowie kraftaufnehmender Teile zum Einsatz kommen. Sie zeichnen sich insbesondere dadurch aus, dass sie lokale oder flächige Verstärkungen aufweisen, die dem Bauteil besondere mechanische Eigenschaften verleihen. Besonders hervorzuheben ist beispielsweise die Erhöhung der Torsions- oder Biegesteifigkeit bei zusätzlicher Gewichtsreduzierung verglichen mit bisher eingesetzten Komponenten.

Im Fahr- und Flugzeugbau werden zunehmend Hybridbauteile eingesetzt, um eine Verringerung der Masse bei gleichzeitig optimierten mechanischen Eigenschaften zu erhalten. Der Nachteil dieser Hybridbauteile liegt in der fehlenden bzw. unzureichenden Haftung zwischen Metall und Kunststoff. Insofern wurden bisher mechanische Verankerungen des Kunststoffs am Metall durchgeführt.

Die Haftung zwischen Metall und Kunststoff kann durch Haftvermittler verbessert werden. Aus EP-A-1808468 und EP-A-2435246 sind Hybridbauteile bekannt, wobei Metall und Kunststoff durch Schmelzklebstoffe als Haftvermittler auf Copolyamid-Basis, die zusätzlich Isocyanat- und Epoxidgruppen enthalten, verbunden sind.

Wünschenswert ist die Beschichtung der Metalle mittels Coil Coating, um eine schnelle und serientaugliche Bereitstellung von Hybridbauteilen, beispielsweise für den Automobilsektor, bereitzustellen. Hierzu sind geeignete Viskositäten, reproduzierbare Schichtdicken und Einbrennbedingungen notwendige Voraussetzungen. Aus dem Stand der Technik sind jedoch bisher keine Haftvermittler bekannt, die für diesen Zweck geeignet sind.

Die Aufgabe bestand folglich darin, einen neuen Haftvermittler zur Verfügung zu stellen, der die Nachteile des Standes der Technik nicht aufweist. Demnach sollte der neue Haftvermittler kontinuierlich applizierbar sein, um für das Coil Coating geeignet zu sein. Darüber hinaus sollte der Haftvermittler den Anforderungen des Fahrzeug- und Flugzeugbaus genügen, wobei die üblichen Anforderungen wie langzeitige und hohe Haftung gegenüber dem Stand der Technik zumindest beibehalten werden sollten. Zudem sollte eine gute Witterungsbeständigkeit, insbesondere Korrosionsschutz, gegeben sein. Metall und Kunststoff des Hybridbauteils sollen stoffschlüssig miteinander verbunden sein.

Demgemäß sind Haftvermittler-Zusammensetzungen gemäß den Ansprüchen gefunden worden. Vorteilhafte Ausführungsformen ergeben sich aus den abhängigen Ansprüchen.

Die erfindungsgemäße Haftvermittler-Zusammensetzung enthält mindestens ein Polymer A, welches ausgewählt ist aus einem Epoxidharz-Phenolharz-Präkondensat, einem Gemisch aus Epoxidharzen und Phenolharzen, Polyamidharze oder Mischungen daraus, und mindestens einen Schmelzklebstoff auf Copolyamid-Basis. Der Schmelzklebstoff enthält zusätzlich blockierte Polyisocyanate und eine Epoxidkomponente. Das Polymer A liegt zum Schmelzklebstoff vorzugsweise in einem Massenverhältnis von 1:0,4 bis 1:10 vor. In einer bevorzugten Ausführungsform der Erfindung enthält die erfindungsgemäße Haftvermittler-Zusammensetzung
a. 5 - 25 Gew.-%, vorzugsweise 10 - 20 Gew.-%, mindestens eines Polymers A,
b. 5 - 50 Gew.-%, vorzugsweise 10 - 40 Gew.-%, bevorzugt 20 - 40 Gew.-% mindestens eines Schmelzklebstoffs auf Copolyamid-Basis, und
c. 30 bis 80 Gew.-%, vorzugsweise 40 bis 70 Gew.-%, mindestens eines organischen Lösemittels,
jeweils bezogen auf das Gesamtgewicht der Zusammensetzung, wobei sich die prozentualen Anteile aller Bestandteile zu 100 Gew.-% addieren.
In einer bevorzugten Ausführungsform wird Polymer A ausgewählt aus mindestens einem Epoxidharz-Phenolharz-Präkondensat, einem Gemisch aus mindestens einem Epoxidharz-Phenolharz-Präkondensat und Epoxidharzen, einem Gemisch aus Epoxidharzen und Phenolharzen oder Mischungen daraus, wobei das Epoxid-Phenolharz-Präkondensat oder das Gemisch aus mindestens einem Epoxidharz-Phenolharz-Präkondensat und Epoxidharzen besonders bevorzugt sind.
Vorteilhafterweise enthält die Haftvermittler-Zusammensetzung mindestens ein Epoxidharz. Dieses kann beispielsweise über den Schmelzklebstoff oder über das Polymer A in die Zusammensetzung eingebracht werden.

Die Haftvermittler-Zusammensetzung kann weiterhin mindestens ein Vernetzerharz, welches ausgewählt ist aus der Gruppe bestehend aus Melaminharzen, geblockten Isocyanatharzen oder Mischungen daraus, enthalten, Das Vernetzerharz ist vorzugsweise in einem Anteil von 1,5 bis 15 Gew.-%, bevorzugt 2 bis 10 Gew.-%, enthalten.

Die Haftvermittler-Zusammensetzung kann als Lösung oder als Dispersion vorliegen. Es ist bevorzugt, dass der Schmelzklebstoff im Polymer A eindispergiert ist.

Die erfindungsgemäße Haftvermittler-Zusammensetzung kann elektrisch leitfähige Stoffe enthalten, die ausgewählt sind aus Graphit, Ruß, Zinkstaub oder Mischungen dieser Stoffe, wodurch elektrisch leitfähige Haftvermittler-Zusammensetzungen entstehen.

Ein weiterer Gegenstand der Erfindung ist eine Primer-Zusammensetzung, die mindestens ein Polymer B, mindestens ein Vernetzerharz, mindestens einen Katalysator und mindestens einen Schmelzklebstoff, der bereits zuvor genannt wurde, enthält. Der Schmelzklebstoff kann blockierte Polyisocyanate und eine Epoxidkomponente enthalten. Vorzugsweise enthält der Schmelzklebstoff in der Primer-Zusammensetzung weniger als 5 Gew.-% blockierte Polyisocyanate und Epoxid, bevorzugt weniger als 2 Gew.-% blockierte Polyisocyanate und Epoxid und besonders bevorzugt weniger als 1 Gew.-% blockierte Polyisocyanate und Epoxid, jeweils bezogen auf das Gesamtgewicht des Schmelzklebstoffs. Ganz besonders bevorzugt ist kein blockiertes Polyisocyanat und Epoxid enthalten.

Das Polymer B ist ausgewählt aus der Gruppe der gesättigten Polyesterharze, Epoxidharz-Phenolharz-Präkondensate, Gemische aus Epoxid-Phenolharz-Präkondensat und Epoxidharzen, Gemische aus Epoxidharzen und Phenolharzen, welche bereits zuvor beschrieben wurden, und Mischungen davon, wobei gesättigte Polyesterharze bevorzugt sind.

Vorzugsweise enthält die Primer-Zusammensetzung
a. 8 - 23 Gew.-%, vorzugsweise 12 - 20 Gew.-%, mindestens eines Polymers B,
b. 1,5 - 15 Gew.-%, vorzugsweise 3 - 9 Gew.-%, mindestens eines Vernetzerharzes, welches ausgewählt ist aus der Gruppe bestehend aus Melaminharzen, geblockten Isocyanatharzen oder Mischungen daraus,
c. 10 - 40 Gew.-% mindestens eines Schmelzklebstoffs auf Copolyamid-Basis und
d. 30 - 80 Gew.-%, vorzugsweise 40 bis 70 Gew.-%, mindestens eines organischen Lösemittels,
jeweils bezogen auf das Gesamtgewicht des Primers, wobei sich die prozentualen Anteile aller Bestandteile zu 100 Gew.-% addieren.
Die Primer-Zusammensetzung kann weiterhin mindestens einen Katalysator, vorzugsweise in einem Anteil von 0,5 - 4 Gew.-%, enthalten, bezogen auf das Gesamtgewicht des Primers. Die Auswahl des geeigneten Katalysators in Abhängigkeit vom Vernetzerharz ist dem Fachmann bekannt.

Beim Einsatz von Melaminharzen als Vernetzerharz wird als Katalysator vorzugsweise ein nichtionogen, blockierten Säurekatalysator gewählt. Hierbei ist es bevorzugt, 0,5 bis 3 Gew.-%, besonders bevorzugt 0,7 bis 2,2 Gew.-% des Katalysators einzusetzen.

Für Systeme mit Isocyanatharz als Vernetzerharz wird vorzugsweise eine metallorganische Verbindungen als Katalysator eingesetzt. Bevorzugt werden 0,7 bis 2,5 Gew.-% dieses Katalysators eingesetzt.

Erfindungsgemäße Zusammensetzung sind demnach Haftvermittler- und Primer-Zusammensetzungen.

Die erfindungsgemäßen Zusammensetzungen können weiterhin Härter wie Dicyandiamid (DCD), vorzugsweise in Anteilen von 3 bis 6 Gew.-%, bezogen auf das Gesamtgewicht an Epoxidharz, enthalten. Zur Härtungsbeschleunigung können Harnstoffderivate wie Monuron oder Fenuron zugesetzt werden, wodurch die Härtungstemperaturen abgesenkt bzw. die Härtungszeiten verkürzt werden können.

Eine Beschichtung umfassend mindestens eine Schicht der erfindungsgemäßen Haftvermittler-Zusammensetzung ist ein weiterer Gegenstand der Erfindung. Die Haftvermittler-Zusammensetzung wird hierzu auf das Metall appliziert, wobei das Metall vor der Applikation gereinigt und/oder mit einer Konversionsschicht vorbehandelt sein kann. Die Metallreinigung und Konversionsschichtzusammensetzungen sind dem Fachmann bekannt. Die mindestens eine erfindungsgemäße Haftvermittler-Zusammensetzung kann auf eine Primer-Zusammensetzung des Standes der Technik aufgebracht sein.

Eine Beschichtung umfassend mindestens eine Schicht der erfindungsgemäßen Primer-Zusammensetzung ist ein weiterer Gegenstand der Erfindung. Die Primer-Zusammensetzung wird hierzu auf das Metall appliziert, wobei das Metall vor der Applikation gereinigt und/oder mit einer Konversionsschicht vorbehandelt sein kann.

Vorzugsweise enthält die Beschichtung umfassend mindestens eine Schicht der erfindungsgemäßen Primer-Zusammensetzung weiterhin zumindest eine Schicht eines Haftvermittlers, wobei mindestens eine Schicht der erfindungsgemäßen Haftvermittler-Zusammensetzung bevorzugt ist. Die Haftvermittlerschicht ist (in der Reihenfolge Metall - ggf. Konversionssschicht - Primerschicht - Haftvermittlerschicht) über der Primerschicht angeordnet bzw. wird auf diese appliziert. Die in der Regel mittels Phosphatierung oder Chromatierung erhaltene Konversionsschicht führt unter anderem zu einer gleichmäßigen und verbesserten Haftung der darauf aufgetragenen Beschichtungen. Geeignete Konvertierungsmittel sind dem Fachmann bekannt.

Die Hybridbauteile umfassend Beschichtungen elektrisch leitfähiger Primer- und/oder Haftvermittler-Zusammensetzungen können mit einer kathodischen Tauchlackierung (KTL) versehen werden.

Beschichtungen umfassend die erfindungsgemäßen Haftvermittler-Zusammensetzungen oder Beschichtungen umfassend die Primer-Zusammensetzungen werden als erfindungsgemäße Beschichtungen definiert.

Die erfindungsgemäßen Beschichtungen werden als weiterer Gegenstand der Erfindung als Haftvermittler zwischen Metall und Kunststoff eines Hybridbauteils verwendet.

Ein weiterer Gegenstand der Erfindung sind Hybridbauteile umfassend Metall und Kunststoff, wobei das Metall mit dem Kunststoff zumindest durch eine erfindungsgemäße Beschichtung verbunden ist.

In einem Verfahren zur Herstellung des Hybridbauteils wird mindestens eine Schicht der erfindungsgemäßen Haftvermittler-Zusammensetzung, vollflächig oder partiell, auf das Metall aufgebracht. Die Haftvermittler-Zusammensetzung wird anschließend thermisch vernetzt. Die Vernetzung kann bei 120 °C bis 250 °C Objekttemperatur für einen Zeitraum von 1 bis 30 min erfolgen. Der Fachmann kann geeignete Zeit-/Temperaturbedingungen über Vorversuche ermitteln.

Beim Coil Coating werden typische Peak-Metal-Temperaturen (PMT) von 180 °C bis 250 °C, vorzugsweise 190 °C bis 220 °C eingestellt. Der Fachmann wird zur Realisierung der PMT die Anlagen- bzw. Bandgeschwindigkeit entsprechend einstellen.

Danach wird der Kunststoff beispielsweise durch einen Spritzgießprozess oder durch Heißpressen auf das Metall aufgebracht und das Metall mit dem Kunststoff physikalisch und/oder chemisch verbunden. Anschließend kann die Kombination aus Metall und Kunststoff für 5 min bis 70 min, vorzugsweise 10 min bis 60 min, bei 120 °C bis 150 °C, vorzugsweise 150 °C bis 230 °C, zur Steigerung von Verbundhaftung und Vernetzungsgrad-einer Wärmebehandlung (tempern) unterzogen werden. Hierdurch wird ein stoffschlüssiger Verbund des Kunststoffs zum Metall erreicht. Derartig erhaltende Hybridbauteile weisen eine dauerhafte Verbindung zwischen dem vorbeschichteten Metall und dem Kunststoff auf und zeigen eine hohe mechanische und dynamische Belastbarkeit. Das Verfahren stellt einen weiteren Gegenstand der Erfindung dar.

In einem weiteren erfindungsgemäßen Verfahren zur Herstellung des Hybridbauteils wird mindestens eine Schicht einer erfindungsgemäßen Primer-Zusammensetzung, vollflächig oder partiell, auf das Metall aufgebracht. Zunächst erfolgt die Applikation und Vernetzung der Primer-Zusammensetzung, die bei 120 °C bis 250 °C Objekttemperatur für einen Zeitraum von 1 bis 30 min vernetzt wird. Der Fachmann kann geeignete Zeit-/Temperaturbedingungen über Vorversuche ermitteln.

Beim Coil Coating werden typische Peak-Metal-Temperaturen von 190 °C bis 250 °C, vorzugsweise 200 °C bis 230 °C eingestellt. Der Fachmann wird zur Realisierung der PMT die Anlagen- bzw. Bandgeschwindigkeit entsprechend einstellen.

In einem bevorzugten Verfahren zur Herstellung des Hybridbauteils werden mindestens eine Schicht einer erfindungsgemäßen Primer-Zusammensetzung und anschließend mindestens eine Schicht einer Haftvermittler-Zusammensetzung, jeweils vollflächig oder partiell, auf das Metall aufgebracht. Vorzugsweise handelt es sich um eine erfindungsgemäße Haftvermittler-Zusammensetzung. Zunächst erfolgt die Applikation und Vernetzung der Primer-Zusammensetzung, die zur Vernetzung bei Coil Coating-typischen Peak-Metal-Temperaturen von 190 °C bis 250 °C, vorzugsweise 200 °C bis 230 °C erhitzt werden kann. Danach wird die Haftvermittler-Zusammensetzung aufgetragen und thermisch vernetzt, wobei Coil Coating-typischen Peak-Metal-Temperaturen von 180 °C bis 250 °C, vorzugsweise 190 °C bis 230 °C vorteilhaft sind. Sofern der Auftrag nicht mittels Coil Coatings vorgenommen wird, kann die Vernetzung bei 150 °C bis 200 °C Objekttemperatur für einen Zeitraum von 5 bis 30 min erfolgen.

Danach wird in den zuvor genannten Verfahren der Kunststoff beispielsweise durch einen Spritzgießprozess oder durch Heißpressen auf das Metall aufgebracht und das Metall mit dem Kunststoff physikalisch und/oder chemisch verbunden. Anschließend kann die Kombination aus Metall und Kunststoff für 5 min bis 70 min, vorzugsweise 10 min bis 60 min, bei 120 °C bis 230 °C, vorzugsweise 150 °C bis 230 °C zur Steigerung von Verbundhaftung und Vernetzungsgrad-einer Wärmebehandlung (tempern) unterzogen werden. Hierdurch wird ein stoffschlüssiger Verbund des Kunststoffs zum Metall erreicht. Derartig erhaltende Hybridbauteile weisen eine dauerhafte Verbindung zwischen dem vorbeschichteten Metall und dem Kunststoff auf und zeigen eine hohe mechanische und dynamische Belastbarkeit. Das Verfahren stellt einen weiteren Gegenstand der Erfindung dar.

Die Applikation der Zusammensetzung in den erfindungsgemäßen Verfahren kann kontinuierlich oder diskontinuierlich erfolgen. Die Zusammensetzungen werden vorteilhafterweise thermisch gehärtet.

Die erfindungsgemäßen Zusammensetzungen können kontinuierlich oder diskontinuierlich mittels Elektrotauchlackieren, Walzen, Gießen, Spritzen und Sprühen appliziert werden, wobei der Walzenauftrag nach dem Coil Coating-Verfahren bevorzugt ist. Hierbei können die erfindungsgemäßen Zusammensetzungen ein- oder beidseitig aufgebracht werden. Die Nassschichtdicken der Haftvermittler-Zusammensetzungen können 20 µm bis 250 µm, für das Coil Coating vorzugsweise 40 µm bis 120 µm, und die Nassschichtdicken der Primer-Zusammensetzungen können 10 µm bis 90 µm, für das Coil Coating vorzugsweise 10 µm bis 40 µm, für andere Applikationsverfahren vorzugsweise 30 µm bis 90 µm, betragen.

Geeignete Metalle sind z.B. eisenhaltige Legierungen wie Stahl, Aluminium, Magnesium, Titan sowie Legierungen der zuvor genannten Metalle. Bevorzugte Metalle sind Stahl, Titan, Aluminium sowie Legierungen der zuvor genannten Metalle, besonders bevorzugt Stahl und Aluminium sowie AluminiumLegierungen.

Bevorzugte Stähle sind unlegierte Stähle oder Edelstähle. Stähle mit einem Schutzüberzug sind besonders bevorzugt. Geeignete Überzüge sind beispielsweise Überzuge aus Zink, Aluminium-Silizium, Aluminium-Zink, Zink-Aluminium, Zink-Eisen oder Zink-Magnesium, wobei Aluminium-Silizium, Zink-Aluminium und Zink bevorzugt und Zink besonders bevorzugt sind. Die Zusammensetzung der Überzüge ist beispielsweise definiert in der Broschüre "Schmelztauchveredeltes Band und Blech" des Stahl-Informations-Zentrums im Stahl-Zentrum, Düsseldorf, Deutschland, Ausgabe 2010.

Vor dem Aufbringen des Kunststoffs kann das beschichtete Metall umgeformt oder verformt werden. Die Um- bzw. Verformung kann vor oder nach dem Auftrag der zuvor genannten Zusammensetzungen erfolgen.

Das Aufbringen des Kunststoffs auf das beschichtete Metall kann in bekannter Weise, z. B. durch Spritzgießen, Pressen, Laminieren, Hinterspritzen oder (Co-)Extrudieren erfolgen. Vorzugsweise wird der Kunststoff mittels Spritzgusstechnologie eingespritzt. Hierzu wird das beschichtete Metallteil in das Spritzgusswerkzeug eingelegt und nach dem Schließen des Werkzeugs mit dem Kunststoff hinterspritzt. Beim Kontakt der Kunststoffschmelze mit der beschichteten Metalloberfläche bildet sich ein stoffschlüssiger Verbund bzw. die Haftung zwischen den Komponenten aus. Das stoffschlüssig verbundene Hybridbauteil kann dann aus dem Spritzgießwerkzeug entformt und weiter ver- oder bearbeitet werden.

Das mit den erfindungsgemäßen Beschichtungen versehene Metall kann in einem Bereich von 50 °C bis 250 °C vortemperiert sein, um die Temperatur im Kontaktbereich zum Kunststoff z.B. beim Überspritzen oder bei (Co-)Extrusion für eine gute Verbindung zwischen Haftvermittler und Kunststoff anzuheben.

Geeignete Kunststoffe sind z.B. Polyolefin-Homo- und Copolymere bspw. auf Propylenbasis, Polyoxymethylene, Polybutylenterephthalate, Polycarbonate, aliphatische oder teilaromatische Polyamide, Gemische aus Polyamid und Polystyrol, Acrylnitril-Butadien-Styrol-Copolymerisate oder weitere Polyamidhaltige Polymere. Mischungen aus Polycarbonaten und Acrylnitril-Butadien-Styrol sind ebenfalls geeignet. Aliphatische oder teilaromatische Polyamide sind bevorzugt. Besonders bevorzugt sind aliphatische Polyamide.

Die Kunststoffe können verstärkt sein (Verstärkungsstoffe), zum Beispiel faserverstärkt, wobei glasfaser- (GF) oder kohlenfaserverstärkte (CF) Kunststoffe bevorzugt sind. Zudem können die Kunststoffe Füllstoffe wie Talkum oder Kreide enthalten. Die Kunststoffe können weiterhin Additive enthalten wie beispielsweise Stabilisatoren, Schlagzähmodifikatoren, Fließhilfsmittel und Pigmente.

Bevorzugte Polyamide (PA) werden ausgewählt aus der Gruppe bestehend aus Polyamid 6, Polyamid 6.6, Polyamid 610, Polyamid 612, Polyamid 613, Polyamid 614, Polyamid 106, Polyamid 1010, Polyamid 1012, Polyamid 1212, Polyamid 11, Polyamid 12, Polyphthalamiden oder Mischungen auf Basis dieser Polyamide. Besonders bevorzugte Polyamide sind ausgewählt aus Polyamid 6, Polyamid 6.6 sowie deren Mischungen. Die Polyamide können Verstärkungsstoffe, Füllstoffe oder Mischungen dieser Stoffe enthalten.

Die erfindungsgemäßen Hybridbauteile finden Anwendungen im Maschinen- und Anlagenbau, Fahrzeugbau, in der Luftfahrtindustrie, im Schienenbau und dergleichen. Eine typische Anwendung ist im Bereich von tragenden Strukturen, beispielsweise Front-Ends (Stoßfängern) oder weiteren Karosserie- und Rahmenteilen, als Rahmen- und Karosserieteile wie Frontendträger, Tür-, Dach-, Boden- oder Fahrwerkskomponenten oder Stoßfänger zu finden. Rahmen, Profile, Fassadenelemente oder Führungsleisten von Fenstern und Türen im Bereich Hausbau und Architektur sind ebenso geeignete Verwendungsgebiete.

Ein weiterer Gegenstand der Erfindung ist ein Metallsubstrat, das mit mindestens einer erfindungsgemäßen Haftvermittler-Zusammensetzung, mit mindestens einer erfindungsgemäßen Primer-Zusammensetzung oder einer Mischung aus beiden beschichtet ist. Das Substrat kann z. B. ein metallisches Halbzeug oder ein metallisches Formteil sein. Vorzugsweise ist das Substrat ein Metallband oder ein Metalldraht.

### Polymer A

Das Polymer A wird ausgewählt aus mindestens einem Epoxidharz-Phenolharz-Präkondensat, einem Gemisch aus mindestens einem Epoxidharz-Phenolharz-Präkondensat und Epoxidharzen, einem Gemisch aus Epoxidharzen und Phenolharzen, Polyamidharzen oder Mischungen daraus.

### Epoxidharz und Phenolharz

Ein geeignetes Polymer A stellt ein Gemisch aus Epoxidharz und Phenolharz dar. Weiterhin können die Harze miteinander reagiert haben, so dass ein Präkondensat enthaltend mindestens ein Epoxid- und mindestens ein Phenolharz zum Einsatz kommen kann. Derartige Präkondensate werden beispielsweise in D. Stoye, W. Freitag: Lackharze, Carl Hanser Verlag München 1996, ISBN 978-3446174757, Kapitel 6.3.8.2.2, beschrieben.
Vorzugsweise beträgt das molare Verhältnis von Epoxidgruppen des Epoxidharzes zu Hydroxygruppen des Phenolharzes 40:60 bis 15:85, vorzugsweise 50:50 bis 80:20. Im Falle eines Überschusses an Hydroxygruppen des Phenolharzes wird das Expidharz-Phenolharz-Präkondensat vorzugsweise mit weiterem Epoxidharz vermischt.
Das Epoxid-Äquivalentgewicht der eingesetzten Epoxidharze kann zwischen 400 bis 4000 g/mol, vorzugsweise 700 bis 3000 g/mol, liegen (bestimmt nach SMS 2026).
Der Anteil an OH-Gruppen geeigneter Epoxidharze beträgt vorzugsweise 2000 bis 4500 mmol/kg, bevorzugt 2300 bis 4000 mmol/kg (Methode SMS 2367).
Als Epoxidharz können beispielsweise Verbindungen auf Basis von Diolen, Polyolen oder Dicarbonsäuren eingesetzt werden, wobei Diole bevorzugt und entsprechende Phenol-Diol-Derivate besonders bevorzugt sind. Ganz besonders bevorzugte Phenol-Diol-Derivate sind Bisphenole, insbesondere Bisphenol A. Das Epoxidharz wird üblicherweise erhalten durch Umsetzung mit Epichlorhydrin. Geeignete Epoxidharze haben eine Dichte von 1 bis 1,3 kg/L (25 °C; bestimmt nach ASTM D792). Die Glasübergangstemperatur (Tg) kann 20 °C bis 100 °C betragen, vorzugsweise 25 °C bis 90 °C (Bestimmung nach ASTM D3418). Der Schmelzbereich liegt üblicherweise im Bereich von 45 °C bis 150 °C (nach DIN 53181). Geeignete Epxidharze sind beispielsweise unter den Bezeichnungen EPIKOTE Resin wie etwa EPIKOTE Resin 1001 oder 1009 der Hexion Specialty Chemicals, Inc. erhältlich.

Das Phenolharz kann teilweise alkyliert, vorzugsweise methyliert, ethyliert oder butyliert, bevorzugt butyliert sein. Die Viskosität kann 340 bis 390 mPa·s bei 23 °C betragen (nach Methode 02-AR). Die Farbzahl nach Gardner kann im Bereich von 0 bis 4 liegen. Der Festkörpergehalt beträgt üblicherweise 40 bis 70 Gew.-%, vorzugsweise 55 bis 60 Gew.-% (nach Methode 01-DK). Die Dichte kann 0,9 bis 1,1 kg /L (23 °C) betragen. Geeignete Phenolharze werden beispielsweise unter den Bezeichnungen Bakelite-Harz (Bakelite AG), Härter (Ciby-Geigy), Ilmtalor (Ilmtal Kunstharz Beier) oder Santolink (Monsanto) angeboten.

Aus der Umsetzung des Epoxidharzes mit dem Phenolharz kann ein Präkondensat erhalten werden. Dieses kann eine Viskosität von 1500 bis 2100 mPa·s, eine Farbzahl nach Gardner von 4, einen Festkörpergehalt von 30 bis 60 Gew.-%, vorzugsweise 40 bis 50 Gew.-%, bezogen auf das Gesamtgewicht des Präkondensats, und eine Dichte von 0,9 bis 1,1 kg /L (23 °C) aufweisen.

### Polyamidharz

Geeignete Polyamidharze sind beispielsweise Polyamidimidharze. Die Polyamidharze können in organischen Lösemitteln vorliegen, wobei N-Methylpyrrolidon, N-Ethylpyrrolidon oder Gemische aus N-Methylpyrrolidin und N-Ethylpyrrolidon bevorzugt sind. Die genannten Lösemittel können mit Xylol vermengt sein.

Die Polyamidimidharzlösungen haben einen Festkörpergehalt von 30 bis 50 Gew.-%, vorzugsweise von 35 bis 45 Gew.-% (Bestimmung nach DIN EN ISO 3251), eine Viskosität bei 23 °C von 1500 bis 3500 mPa·s (Bestimmung nach DIN EN ISO 3219 / A.3). Die Dichte kann zwischen 1 bis 1,25 g/cm³ betragen (Bestimmung nach DIN 51757).

### Schmelzklebstoff

Der Schmelzklebstoff enthält mindestens ein Copolyamid. Das Copolyamid ist aus Amid-Monomeren und Comonomeren herstellbar. Durch die Comonomere werden vorzugsweise Copolyamide erhalten, die einen Schmelzpunkt zwischen 95 °C und 175 °C aufweisen.

Die Amid-Monomeren sind vorzugsweise ausgewählt sind aus der Gruppe bestehend aus Laurinlactam, Amionoundecansäure oder Mischungen daraus. Copolyamide auf Basis von Laurinlactam sind besonders bevorzugt.

Die Comonomere werden vorzugsweise ausgewählt aus aliphatischen oder cycloaliphatischen Diaminen, aliphatischen oder cycloaliphatischen Dicarbonsäuren, Lactamen und Mischungen daraus. Die Comonomere enthalten, unabhängig voneinander, vorzugsweise 4 bis 18 C-Atome. Geeignete Dicarbonsäuren sind beispielsweise Adipinsäure, Sebazinsäure oder Dodecandisäure. Geeignete Diamine stellen beispielsweise Hexamethylendiamin, Decamethylendiamin oder Dodecamethylendiamin dar. Lactame wie Caprolactam können ebenfalls als Comonomer eingesetzt werden.

Bevorzugte Comonomere sind Caprolactam und ein Polymer aus Adipinsäure und Hexamethylendiamin, vorzugsweise in einem Massenverhältnis von 1:1.

Durch einen Überschuss an Amingruppen der Diamine resultieren Copolyamide mit reaktiven Aminoendgruppen.

Die Copolyamide weisen vorzugsweise Aminzahlen von 75 bis 400 mmol/kg auf.

Das gewichtsmittlere Molekulargewicht der Copolyamide ist vorzugsweise in einem Bereich von 15000 bis 70000 g/mol anzufinden (bestimmt mittels Gelpermeationschromatographie gegen Styrolstandard). Die relative Lösungsviskosität beträgt vorzugsweise 1,2 bis 1,8 (Bestimmung nach ISO 307).

Die Copolyamide bzw. der Schmelzklebstoff können in den erfindungsgemäßen Zusammensetzungen in Lösung, in Dispersion oder in Pulverform eingesetzt werden, wobei die Pulverform bevorzugt ist. Ein geeignetes Lösemittel ist beispielsweise m-Kresol.

Die Pulverform kann beispielsweise durch Vermahlen erhalten werden, wobei der Korndurchmesser vorzugsweise < 100 µm, bevorzugt < 80 µm und besonders bevorzugt < 70 µm ist (Siebanalyse).

Dem Copolyamid können mindestens eine Epoxidkomponente und mindestens ein blockiertes Polyisocyanat als weitere Bestandteile des Schmelzklebstoffs zugesetzt sein.

Als Epoxidkomponente können die zuvor genannten Epoxidharze eingesetzt werden. Typischerweise weist die bevorzugte Epoxidkomponente einen Epoxy-Index von 1-2 Eq/kg auf. Das Epoxid-Äquivalenzgewicht liegt vorzugsweise zwischen 875 und 1000 g/mol. Die Dichte kann 1,1 bis 1,3 kg/L, vorzugsweise 1,15 bis 1,25 kg/L betragen. Die Glasübergangstemperatur ist üblicherweise im Bereich von 40 bis 60 °C, vorzugsweise 45 bis 55 °C angesiedelt. Der Schmelzklebstoff enthält die Epoxidkomponente vorzugsweise in einem Anteil von 2,5 bis 10 Gew.-%, bevorzugt 4 bis 6 Gew.-%, jeweils bezogen auf das Gesamtgewicht des Schmelzklebstoffs.

Der Anteil an blockiertem Polyisocyanat beträgt vorzugsweise 2,5 bis 15 Gew.-%, bevorzugt 4 bis 6 Gew.-%, jeweils bezogen auf das Gesamtgewicht des Schmelzklebstoffs.

Die blockierte Polyisocyanatkomponente kann aromatisch, aliphatisch oder cycloaliphatisch sein, wobei aliphatische oder cycloaliphatische Polyisocyanate bevorzugt sind. Blockierungsmittel für Isocyanate wie Oxime, Phenole oder Caprolactam sind dem Fachmann bekannt. Bevorzugt liegt die Polyisocyanatkomponente als Uretdion vor, um blockiert zu sein. Typische Beispiele werden unter der Bezeichnung VESTAGON von Evonik Industries, Deutschland, oder Desmodur von Bayer, Deutschland, vertrieben.

Geeignete Schmelzklebstoffe werden beispielsweise von der Firma Evonik Industries, Deutschland, unter der Bezeichnung VESTAMELT angeboten. Beispielsweise seien die Typen X1027-P1, X1038-P1, X1316-P1 und X1333-P1 genannt.

Neben dem Schmelzklebstoff können darüber hinaus Propfcopolymere aus Polyamin und polamidbildenden Monomern wie Lactamen bzw. ω-Aminocarbonsäuren enthalten sein, wie sie in EP1065236A2 beschrieben sind:
Beim Pfropfcopolymer liegt die Aminogruppenkonzentration bevorzugt im Bereich von 100 bis 2 500 mmol/kg.

Als Polyamin können beispielsweise folgende Substanzklassen verwendet werden:
- Polyvinylamine (Römpp Chemie Lexikon, 9. Auflage, Band 6, Seite 4921, Georg Thieme Verlag Stuttgart 1992);
- Polyamine, die aus alternierenden Polyketonen hergestellt werden (DE-OS 196 54 058);
- Dendrimere wie beispielsweise ((H₂N-(CH₂)₃)₂N-(CH₂)₃)₂-N(CH₂)₂-N((CH₂)₂-N((CH₂)₃-NH₂)₂)₂ (DE-A-196 54 179) oder Tris(2-aminoethyl)amin, N,N-Bis(2-aminoethyl)-N',N'-bis[2-[bis(2-aminoethyl)amino]ethyl]-1,2-ethandiamin, 3,15-Bis(2-aminoethyl)-6,12-bis[2-[bis(2-aminoethyl)amino]ethyl]-9-[2-[bis[2-bis(2-aminoethyl)amino]ethyl]amino]ethyl]3,6,9,12,15-pentaazaheptadecan-1,17-diamin (J. M. Warakomski, Chem. Mat. 1992, 4, 1000 - 1004);
- lineare Polyethylenimine, die durch Polymerisation von 4,5-Dihydro-1,3-oxazolen und anschließende Hydrolyse hergestellt werden können (Houben-Weyl, Methoden der Organischen Chemie, Band E20, Seiten 1482 - 1487, Georg Thieme Verlag Stuttgart, 1987);
- verzweigte Polyethylenimine, die durch Polymerisation von Aziridinen erhältlich sind (Houben-Weyl, Methoden der Organischen Chemie, Band E20, Seiten 1482 - 1487, Georg Thieme Verlag Stuttgart, 1987) und die in der Regel folgende Aminogruppenverteilung besitzen:
   25 bis 46 % primäre Aminogruppen,
   30 bis 45 % sekundäre Aminogruppen und
   16 bis 40 % tertiäre Aminogruppen.

Das Polyamin besitzt im bevorzugten Fall ein zahlenmittleres Molekulargewicht Mₙ von maximal 20 000 g/mol, besonders bevorzugt von maximal 10 000 g/mol und insbesondere bevorzugt von maximal 5 000 g/mol.

Lactame bzw. ω-Aminocarbonsäuren, die als polyamidbildende Monomere eingesetzt werden, enthalten 4 bis 19 und insbesondere 6 bis 12 Kohlenstoffatome. Besonders bevorzugt werden ε-Caprolactam und Laurinlactam bzw. der zugehörigen ω-Aminocarbonsäuren eingesetzt. Das Molverhältnis C12/C6-Baustein liegt bevorzugt zwischen 4:1 bis 1:4. Das Massenverhältnis Schmelzklebstoff zu Pfropfcopolymer liegt bevorzugt zwischen 19:1 und 1:1.

Das funktionalisierte Polyolefin ist im einfachsten Fall polypropylenbasiert. Es eignen sich aber auch Etylen / C₃- bis C₁₂-α-Olefin-Copolymere. Als C₃- bis C₁₂-α-Olefin wird beispielsweise Propen, 1-Buten, 1-Penten 1-Hexen, 1-Octen, 1-Decen oder 1-Dodecen eingesetzt. Weiterhin können die Etylen / C₃- bis C₁₂-α-Olefin-Copolymere auch bis maximal etwa 10 Gew.-% Olefindiene wie beispielsweise Ethylidennorbornen oder 1,4-Hexadien enthalten. Als Funktionalisierung dienen bevorzugt Säureanhydridgruppierungen, die auf bekannte Weise durch thermische oder radikalische Reaktionen des Hauptkettenpolymers mit einem ungesättigten Dicarbonsäureanhydrid oder einer ungesättigten Dicarbonsäure eingebracht werden. Geeignete Reagenzien sind beispielsweise Maleinsäureanhydrid oder Itaconsäureanhydrid. Auf diese Weise werden 0,1 bis 4 Gew.-%, bezogen auf das Gesamtgewicht der funktionalisierten Polyolefine, aufgepropft, was auch zusammen mit einem weiteren Monomer wie beispielsweise Styrol erfolgen kann.

Die Verwendung von maleinsäuregepfropten Polyolefinen hat weite Verbreitung für industrielle Anwendungen gefunden, insbesondere für schlagzähe Modifikationen oder als Verträglichkeitsvermittler in Blends und mechanisch verstärkten Systemen (Polymer, 2001, 42, 3649-3655 und zitierte Literatur). Genannte Quelle beschreibt beispielhaft auch die Herstellung derartiger funktionalisierter Polyolefine.

Einen typischen Vertreter für ein funktionalisiertes Polyolefin stellt das polypropylenbasierte, säureanhydridgepfropfte Admer QB 520 E (Mitsui Chemicals) dar. Prinzipiell einsetzbar sind auch leichter fließende, mit Maleinsaure gepfropfte Polypropylene der Fa. Kometra (z.B. SCONA TPPP 8012).

Eine weitere Funktionalisierungsmöglichkeit besteht in der Schmelzemischung unfunktionalisierter Polyolefine mit reaktiven Verträglichkeitsvermittlern, die Epoxid- oder Carbonsäureanhydridgruppierungen enthalten. Typische Beispiele stellen Copolymerisate bestehend aus Ethylen, einem oder mehreren nicht reaktiven acrylischen Monomeren mit Maleinsäureanhydrid oder Glycidylmethacrylat dar. Lotader AX8900 (Arkema) stellt einen typischen Vertreter mit Glycidylmethacrylat-Einheiten dar.

Das Verhältnis Polyamid-Komponente zu Polyolefinkomponente liegt zwischen 9 zu 1 und 2 zu 3.

### Organische Lösemittel

Geeignete Lösemittel sind polare oder unpolare organische Lösemittel. Mischungen aus polaren und unpolaren Lösemitteln können ebenfalls eingesetzt werden. Bevorzugte Lösemittel sind Ketone, Glykole, Solvent Naphtha, n-Alkane oder iso-Alkane, wobei die Alkane insbesondere 12 bis 20 C-Atome umfassen.

### Polymer B

Das Polymer B ist ausgewählt aus der Gruppe der gesättigten Polyesterharze, Epoxidharz-Phenolharz-Präkondensate, Gemische aus Epoxid-Phenolharz-Präkondensat und Epoxidharzen, Gemische aus Epoxidharzen und Phenolharzen, welche bereits zuvor beschrieben wurden, und Mischungen davon, wobei gesättigte Polyesterharze bevorzugt sind.

### Polyesterharz

Das Polyesterharz ist vorzugsweise ein Copolymer aus aromatischen Dicarbonsäuren und aliphatischen Diolen. Hierdurch werden lineare, hochmolekulare Copolyester erhalten. Das zahlenmittlere Molekulargewicht liegt vorzugsweise im Bereich von 10000 bis 20000 g/mol. Bevorzugt ist ein zahlenmittleres Molekulargewicht zwischen 14000 und 16000 g/mol (GPC gegen Styrolstandard).

Charakteristisch ist eine Dichte von 1,2 bis 1,3 kg/L, eine Glastemperatur von 40 °C bis 105 °C, bevorzugt 60 °C bis 80 °C, und eine Erweichungstemperatur von 140 bis 150 °C. Die Hydroxylzahl des Polyesterharzes ist vorzugsweise kleiner 10 mg KOH/g, bevorzugt 5 bis 10 mg KOH/g (Bestimmung nach DIN 53240). Die Säurezahl reicht vorzugsweise von 0 bis 3 mg KOH/g. (DIN 53402).

### Epoxidharz

Das Epoxidharz des Polymers B entspricht der Definition des Epoxidharzes des Polymers A. Das Epoxidharz des Polymers B kann in einer erfindungsgemäßen Beschichtung gleich oder verschieden sein zu dem Epoxidharz des Polymers A.

### Vernetzerharz

Das Vernetzerharz wird ausgewählt aus der Gruppe bestehend aus Melaminharzen, geblockten Isocyanatharzen oder Mischungen daraus. Melaminharze sind bevorzugt, wobei Melamin-Formaldehyd-Harze besonders bevorzugt sind. Ganz besonders bevorzugt sind die Melamin-Formaldehyd-Harze mit Alkylgruppen wie Methylgruppen verethert. Insbesondere wird Hexamethoxymethylmelamin (HMMM) eingesetzt

Die geblockten Isocyanatharze sind vorzugsweise mit Phenolen, Oximen, ε-Caprolactam, Malonsäureestern, Acetessigestern, Alkoholen oder sekundären Aminen, bevorzugt Oximen, blockiert. Geeignete Isocyanate sind aliphatische Polyisocyanate wie Hexamethylendiisocyanat wie beispielsweise Desmodur BL 3175 der Firma Bayer, Deutschland. Durch die Reaktion der Polyester mit Isocyanatharzen entstehen Polyurethane.

Das blockierte Isocyanatharz kann mit dem Schmelzklebstoff vermischt sein oder separat zu den Zusammensetzungen gegeben werden.

### Katalysator

Der Katalysator wird üblicherweise als 1 bis 20 %ige Lösung zugegeben, wie sie im Handel angeboten werden.
a) Säurekatalysator Für die Vernetzung der Polyester mit Melaminharzen werden bevorzugt nicht ionogene, blockierte Katalysatoren eingesetzt. Bevorzugt werden epoxidblockierte Säuren auf Basis von DNNSS (Dinonylnaphthalinmonosulfonsäure) und Versaticsäure eingesetzt, wobei blockierte Versaticsäuren besonders bevorzugt sind. Der Katalysator weist üblicherweise einen Festkörpergehalt von 40-60 Gew.-% auf, vorzugsweise 45-55Gew.-%.
b) Metallorganische Katalysatoren Für die Vernetzung der Polyester, der Epoxidharz-Phenolharz-Präkondensate sowie der Gemische aus Epoxidharzen und Phenolharzen mit geblockten Isocyanatharzen können metallorganische Verbindungen eingesetzt werden. Bevorzugt sind zinnorganische Verbindungen. Besonders bevorzugt sind Katalysatoren auf Basis von DBTL (Dibuthylzinndilaurat).

### Weitere Inhaltsstoffe

Die erfindungsgemäßen Zusammensetzungen können weiterhin Farbmittel, vorzugsweise Pigmente, enthalten. Darüber hinaus können funktionelle Pigmente wie Korrosionsschutzpigmente oder elektrisch leitfähige Pigmente wie Metallpigmente, Verlaufsmittel, Füllstoffe oder Elastfizierungsharze enthalten Nachfolgend wird die vorliegende Erfindung anhand von Beispielen näher erläutert.

### Beispiele

Es wurde die Haftung von Kunststoff auf Metall in Hybridbauteilen untersucht. Hierzu wurden unterschiedliche Metalle und Kunststoffe eingesetzt. Die Metalle wurden vor Auftrag von Primer- bzw. Haftvermittler-Zusammensetzungen gereinigt und mit einer Chromatierung V2 als Konversionsschicht V versehen.

Eine Temperaturüberprüfung erfolgte mittels Temperaturmessstreifen, die die erreichte Temperatur durch einen Farbumschlag (schwarz) anzeigen.

Die Temperbedingungen sind: 30 min bei 190 °C.

Zur Ermittlung der Haftung wurden Zugscherversuche durchgeführt.

### Eingesetzte Stoffe:

### Primer-Zusammensetzungen

Polymer B, Pigmente und Füllstoffe werden auf einen mittleren Korndurchmesser von weniger als 15 µm eingestellt; der Schmelzklebstoff wird anschließend zugegeben
P1: Polyesterharz (zahlenmittleres Molekulargewicht 15000 g/mol), Melaminharz, Korrosionsschutzpigment, Füllstoff, Farbmittel, Säurekatalysator, Lösemittel und Colyamid-Schmelzklebstoff ohne Epoxidkomponente und blockiertem Polyisocyanat
P2: Epoxidharz-Phenolharz-Präkondensat, Korrosionsschutzpigment, Füllstoffe, Farbmittel, Lösemittel und Copolyamidschmelzklebstoff ohne Epoxidkomponente und blockiertem Polyisocyanat
P3: Polyester (zahlenmittleres Molekulargewicht 20000 g/mol), Polyisocyanat-Vernetzer, Zinnkatalysator, Lösemittel und Copolyamid-Schmelzklebstoff ohne Epoxidkomponente und blockiertem Polyisocyanat
P4: Polyestergemisch aus 2 Polyesterharzen (zahlenmittleres Molekulargewicht 15000 und 20000 g/mol) in Kombination mit blockiertem Isocyanatharz, Zinnkatalysator, Lösemittel und Copolyamidschmelzklebstoff ohne Epoxidkomponente und blockiertem Polyisocyanat
P5: Polyester (zahlenmittleres Molekulargewicht 20000 g/mol), Polyisocyanat-Vernetzer, Zinnkatalysator, Lösemittel

Erfindungsgemäß sind die Zusammensetzungen P1 und P4, nicht erfindungsgemäß sind die Zusammensetzungen P2, P3 und P5.

Haftvermittler-Zusammensetzungen
L1: Epoxidharz-Phenolharz-Gemisch mit Copolyamidschmelzklebstoff mit Epoxidkomponente und blockiertem Polyisocyanat
L2: Epoxidharz-Phenolharz-Präkondensat mit Copolyamidschmelzklebstoff mit Epoxidkomponente und blockiertem Polyisocyanat
L3: Epoxidharz-Phenolharz-Präkondensat mit Copolyamidschmelzklebstoff ohne Epoxidkomponente und blockiertem Polyisocyanat
L4: Epoxidharz-Phenolharz-Präkondensat mit Copolyamidschmelzklebstoff mit Epoxidkomponente und blockiertem Polyisocyanat (der Copolyamidschmelzklebstoff weist gegenüber dem Copolyamidschmelzklebstoff aus L2 eine geringere molare Masse auf)

Erfindungsgemäß sind die Zusammensetzungen L1, L2 und L4, nicht erfindungsgemäß ist die Zusammensetzung L3.
MetallvariantenM1: DX56D Z140 MBO in 1,0mm
M2: DX53D Z140 MBO in 0,6mm
M4: AW-5754 AlMg3 H22 DIN EN 485 -2
M5: CuZn37 nach DIN EN 17670 T1
M6: Titanzink nach EN 988

### Kunststoffvarianten

K1: PA6GF30 Durethan BKV30 H2.0 der Fa. LANXESS Deutschland GmbH
K2. PA6.6 Durethan A30 S der Fa. LANXESS Deutschland GmbH
K3: PA1010 VESTAMID Terra DS18 der Fa. Evonik Industries AG
K4: PA1010GF65 VESTAMID Terra BS1429 der Fa. Evonik Industries AG
K5: PA1010CF30 VESTAMID HTplus TGP3561 der Fa. Evonik Industries AG
K6: PA6T VESTAMID HTplus M1000 der Fa. Evonik Industries AG
K7: PA6TGF50 VESTAMID HTplus M1035 der Fa. Evonik Industries AG
K8: PBTGF30 VESTODUR GF30 der Fa. Evonik Industries AG
K9: PC Makrolon 2205 der Fa. Bayer AG
K10: PA12CF Composite der Fa. Evonik, Es wurden 1,0 mm starke Faserverbundwerkstoff-Platten aus VESTAMID L1600 (Polyamid 12) und Kohlenstofffasergewebe mit Endlosfasern eingesetzt. Das Gewebe besitzt ein Gewicht von ca. 285 g/m² mit einer Orientierung von 0°/90°. Die Faserverbundwerkstoff-Platten wurden im Pressverfahren hergestellt.

### A) Laboruntersuchungen mittels Rakelauftrag

Hierzu wurden im Labor Varianten der Primer mittels Spiralrakeln auf Bleche aus Stahl DX56D Z140 MBO, Dicke 1 mm, (M1) im Format DIN A4 mit Konversionsschicht (Phosphatierung) aufgebracht und anschließend in einem Durchlauftrockner für 55 s thermisch vernetzt. Als Peak Metal Temperatur (PMT) wurde ein Bereich von 216 °C bzw. 232 °C vorgegeben. Die Abkühlung der mit Primer beschichteten DINA4 Tafeln erfolgte bei Raumtemperatur.

| **Primer** | **Ofentemperatur in °C** | **PMT in °C** | **TSD in µm** | **Rakel-Nr.** |
|---|---|---|---|---|
| P2 | 345 | 216 | 11-13 | 22 |
| P1 | 345 | 216 | 15-17 | 20 |
| P3 | 355 | 232 | 12-16 | 22 |
| P4 | 355 | 232 | 12-16 | 24 |
| P5 | 355 | 232 | 14-16 | 24 |
| P5 | 355 | 232 | 14-16 | 24 |

| | | | | |
|---|---|---|---|---|
| TSD: Trockenschichtdicke | | | | |

Danach wurden die Bleche mittels Spiralrakel Nr. 42 mit einer Haftvermittler-Zusammensetzung versehen, und im Durchlauftrockner für 70 s thermisch vernetzt (PMT = 216 °C). Die Proben wurden anschließend bei Raumtemperatur abgekühlt. Die Trockenschichtdicke betrug jeweils 35 µm.

Die so beschichteten Blechmuster der Dicke 1 mm wurden auf 50 mm x 36 mm zugeschnitten und in einem Spritzgießwerkzeug auf einer Spritzgießmaschine des Typs Arburg 370 S bei einer Werkzeugtemperatur 110 °C und einer Schmelzetemperatur 280 °C mit dem Kunststoff (Dicke 2 mm) einseitig überspritzt. Die Gesamtlänge der Probekörper betrug 60 mm. Der Überlappungsbereich zwischen Kunststoff und Metallblech beträgt 18 mm x 50 mm. Die Zugscherproben wurden anschließend auf einer Universal-Zugprüfmaschine in Anlehnung an ISO 527 mit einer Prüfgeschwindigkeit von 10 mm / min bei 23 °C und 50 % relativer Luftfeuchtigkeit geprüft und die Bruchkraft der Proben ermittelt. Die Proben wurden hierzu nach dem Überspritzen wahlweise getempert und die Zugscherfestigkeiten (Haftfestigkeiten) getemperter und ungetemperter Proben verglichen.

| **Primer** | **Haftvermittler** | **Haftfestigkeit in MPa; ungetempert** | **Haftfestigkeit in MPa; getempert** | **Bemerkungen (getempert)** |
|---|---|---|---|---|
| P2 | L2 | 3,3 | 11,1 | Bruch Kunststoff |
| P1 | L2 | 3,8 | 11,5 | Bruch Kunststoff |
| P3 | L2 | 4,8 | 5,9 | |
| P4 | L2 | 3,6 | 11,1 | Bruch Kunststoff |
| P5 | L2 | 2,4 | 9,5 | Bruch Kunststoff |
| P5 | L3 | 5,5 | 10,8 | Bruch Kunststoff |

Bei den Laborversuchen mittels Rakel-Laborversuch weisen die beschichteten und überspritzten Hybridverbundproben mit Temper-Schritt im Vergleich zu den Proben ohne Tempern gesteigerte Verbundkräfte (Bruchkräfte) auf.

Des Weiteren wurde die Haftung zu verschiedenen Metalllegierungen analog zu den vorherigen Versuchen untersucht, wobei die Blechmuster auf ca. 25 mm x 60 mm zugeschnitten wurden.

| **Metall** | **Primer** | **Haftvermittler** | **Werkzeugtemperatur in °C** | **Haftfestigkeit in MPa ungetempert** |
|---|---|---|---|---|
| M5 | ohne | ohne | 80°C | k. H. |
| M5 | P1 | L4 | 80°C | 0,7 |
| M6 | ohne | ohne | 80°C | k. H. |
| M6 | P1 | L4 | 80°C | 1,0 |
| M7 | ohne | ohne | 80°C | k. H. |
| M7 | P1 | L4 | 80°C | 1,7 |
| M8 | ohne | ohne | 80°C | k. H. |
| M8 | P1 | L4 | 80°C | 2,3 |
| M9 | ohne | ohne | 80°C | k. H. |
| M9 | P1 | L4 | 80°C | 3,4 |

| | | | | |
|---|---|---|---|---|
| k. H.: keine Haftung | | | | |

### B) Anlagen-Versuch

Der Auftrag der Zusammensetzungen erfolgte mittels Walzenauftrag im Coilcoating-Prozess auf einer entsprechenden Beschichtungsanlage und einer anschließenden thermischen Vernetzung (thermische Härtung) der aufgebrachten Lackschicht in einem Durchlaufofen. Vor dem eigentlichen Lack- oder Primerauftrag erfolgte eine Vorbehandlung der Metalloberfläche (Reinigung, Erzeugung einer Konversionsschicht V1 - Phosphatierung oder V2 - Chromatierung). Als Metall wurde ein verzinkter Bandstahl DX53D Z140 MBO (Stahl S2) der Schichtdicke 0,6 mm und einer Breite von 390 mm eingesetzt. Die Trockenschichtdicken der Primer-Zusammensetzungen betragen 9 bis 13 µm, die der Haftvermittler-Zusammensetzungen 18 bis 28 µm. Als Peak Metal Temperatur (PMT) wurde ein Bereich von 216 °C bis 224 °C vorgegeben.

Aus den Blechen wurden Stahlblechstreifen (ca. 25 mm x 60 mm) für die Überspritzversuche zugeschnitten. Die beschichteten Stahlblechstreifen wurden mit den Kunststoffen K1- K9 nach Einlegen in ein Spritzgießwerkzeug überspritzt und hiermit Zugscherproben für Haftungstests hergestellt.

Die einseitige Verarbeitung des Kunststoffs erfolgte auf einer Arburg Spritzgießmaschine Typ Allrounder 420 C bei einer Massetemperatur von 280°C, einer Werkzeugtemperatur von 80 °C und 120 °C und bei einer Einspritzgeschwindigkeit von ca. 30 ccm/sec. Wichtig war hierbei eine Einspritzverzögerung von ca. 15 s vorzusehen, damit der eingelegte Blechstreifen auf Werkzeugtemperatur vorgewärmt werden konnte, wodurch die Haftung positiv begünstigt wurde. Die Überlappungsbereiche zwischen Kunststoff und Metall betrugen 25 mm x 25 mm. Die Dicke des überspritzten Kunststoffs betrug 4 mm. Nach dem Entformen wurden die einzelnen Zug-Scher-Probekörper vom Anguss getrennt.

Die so erzeugten Prüfkörper wurden bei 50 % relativer Luftfeuchte für mindestens für 24 h bei 23 °C gelagert, um einen einheitlichen Konditionierungszustand zu gewährleisten. Die Probekörper werden dann in eine Standard-Zugprüfmaschine Zwick/Roell Z-020 eingespannt und mit einer Geschwindigkeit von 5 mm/min bei 23 °C mit einem Abstand zwischen den Klemmen und dem Überlappungsbereich von ca. 25 mm / Seite geprüft.

Die gemessene Zugscherfestigkeit (in MPa) ist in nachfolgender Tabelle für die Beschichtung aus Primer-Zusammensetzung und Haftvermittler-Zusammensetzung angegeben.

| **Metall** | **V** | **Primer** | **Haftvermittler** | **Kunststoff** | **Werkzeugtemperatur in °C** | **Haftfestigkeit in MPa ungetempert** | **Haftfestigkeit in MPa getempert** |
|---|---|---|---|---|---|---|---|
| M1 | V1 | ohne | L1 | K1 | 80 | 1,9 | 7,2 |
| M1 | V1 | ohne | L1 | K1 | 120 | 6,2 | 7,4 |
| M2 | V2 | P1 | L2 | K1 | 80 | 6,5 | 7,7 |
| M2 | V2 | P1 | L2 | K1 | 120 | 7,7 | 7,6 |
| M4 | V2 | P1 | L2 | K1 | 80 | 5,3 | 5,7 |
| M4 | V2 | P1 | L2 | K1 | 120 | 6,2 | 6,2 |
| M2 | V2 | ohne | ohne | K1 | 80 | k.H. | k.H. |
| M2 | V2 | ohne | ohne | K1 | 120 | k.H. | k.H. |
| M2 | V2 | P1 | L4 | K1 | 80 | 6,6 | 5,8 |
| M2 | V2 | P1 | L4 | K1 | 120 | 7,8 | 6,8 |
| M2 | V2 | ohne | ohne | K2 | 80 | k.H. | k. A. |
| M2 | V2 | P1 | L4 | K2 | 80 | 4,2 | k. A. |
| M2 | V2 | ohne | ohne | K3 | 80 | k.H. | k. A. |
| M2 | V2 | P1 | L4 | K3 | 80 | 0,7 | k. A. |
| M2 | V2 | ohne | ohne | K4 | 80 | k.H. | k. A. |
| M2 | V2 | P1 | L4 | K4 | 80 | 6,0 | k. A. |
| M2 | V2 | ohne | ohne | K5 | 80 | k.H. | k. A. |
| M2 | V2 | P1 | L4 | K5 | 80 | 6,5 | k. A. |
| M2 | V2 | ohne | ohne | K6 | 120 | k.H. | k. A. |
| M2 | V2 | P1 | L4 | K6 | 120 | Material-bruch | k. A. |
| M2 | V2 | ohne | ohne | K7 | 120 | k.H. | k. A. |
| M2 | V2 | P1 | L4 | K7 | 120 | 6,0 | k. A. |
| M2 | V2 | ohne | ohne | K8 | 80 | k.H. | k. A. |
| M2 | V2 | P1 | L4 | K8 | 80 | 2,6 | k. A. |
| M2 | V2 | ohne | ohne | K9 | 80 | k.H. | k. A. |
| M2 | V2 | P1 | L4 | K9 | 80 | 1,5 | k. A. |

| | | | | | | | |
|---|---|---|---|---|---|---|---|
| k.H.: keine Haftung; k. A. keine Angabe | | | | | | | |

Die Beschichtung aus Primer- und Haftvermittler-Zusammensetzung erreichte hier vorteilhaft bereits hohe Werte einer Haftung insbesondere bei hoher Werkzeugtemperatur(120 °C) ohne einen nachträglichen Tempervorgang der Proben nach Überspritzen. Das nachträgliche Tempern erhöhte die Haftung insbesondere bei der niedrigeren Werkzeugtemperatur von 80°C.

### C) Pressversuch

Der Erhalt der Verbindung zwischen Kunststoff und beschichteten Metall erfolgte durch einen Pressvorgang in einer hydraulischen Heißpresse (Hersteller Paul Weber, Bezeichnung TEMPRESS). Dabei wird in eine Hälfte der Heißpresse das beschichtete Metallblech mit den Maßen von ca. 60x25x0,6 mm in eine Schablone eingelegt, Darauf wird eine spritzgegossene Kunststoffplatte mit den Maßen 60x25x4 mm positioniert. Die blechseitige Hälfte der Presse wird auf ca. 200°C-230°C erhitzt. Im Anschluss werden die Kunststoffkomponente und das beschichtete Metallblech bei einem Druck von ca. 32 bar und einer Haltezeit von ca. 5min zu einem Verbundkörper (Zugscherstab) verpresst (Überlappfläche 25 mm x 25 mm).

Der Auftrag der Haftvermittler-Zusammensetzungen und Prüfung der Haftfestigkeit wurde analog zu den Anlagenversuchen durchgeführt.

| **Metall** | **V** | **Primer** | **Haftvermittler** | **Kunststoff** | **Werkzeugtemperatur in °C** | **Haftfestigkeit in MPa ungetempert** |
|---|---|---|---|---|---|---|
| M2 | V2 | ohne | ohne | K1 | 200°C | k.H. |
| M2 | V2 | P1 | L4 | K1 | 200°C | 2,8 |
| M2 | V2 | ohne | ohne | K7 | 230°C | k.H. |
| M2 | V2 | P1 | L4 | K7 | 230°C | 3,6 |
| M2 | V2 | ohne | ohne | K10 | 230°C | k.H. |
| M2 | V2 | P1 | L4 | K10 | 230°C | 6,0 |

| | | | | | | |
|---|---|---|---|---|---|---|
| k.H.: keine Haftung | | | | | | |

## Patentansprüche

1. Haftvermittler-Zusammensetzung enthaltend
a. mindestens ein PolymerA, welches ausgewählt ist aus mindestens einem Epoxidharz-Phenolharz-Präkondensat, einem Gemisch aus mindestens einem Epoxidharz-Phenolharz-Präkondensat und Epoxidharzen, einem Gemisch aus Epoxidharzen und Phenolharzen, Polyamidharzen oder Mischungen daraus, und
b. mindestens einen Schmelzklebstoff auf Copolyamid-Basis, wobei der Schmelzklebstoff zusätzlich blockierte Polyisocyanate und eine Epoxidkomponente enthält.

2. Haftvermittler-Zusammensetzung nach Anspruch 1, **dadurch gekennzeichnet, dass** die Zusammensetzung enthält
a. 5 bis 25 Gew.-% mindestens eines Polymers A,
b. 5 bis 50 Gew.-% mindestens eines Schmelzklebstoffs auf Copolyamid-Basis, und
c. 30 bis 80 Gew.-% mindestens eines organischen Lösemittels,
jeweils bezogen auf das Gesamtgewicht der Zusammensetzung, wobei sich die prozentualen Anteile aller Bestandteile zu 100 Gew.-% addieren.

3. Haftvermittler-Zusammensetzung nach einem der vorherigen Ansprüche, **dadurch gekennzeichnet, dass** die Zusammensetzung mindestens ein Vernetzerharz, welches ausgewählt ist aus der Gruppe bestehend aus Melaminharzen, geblockten Isocyanatharzen oder Mischungen daraus, enthält.

4. Primer-Zusammensetzung enthaltend
a. mindestens ein Polymer B, welches ausgewählt ist aus gesättigten Polyesterharzen, Epoxid-Phenolharz-Präkondensaten, Gemischen aus Epoxidharzen und Phenolharzen sowie Mischungen davon,
b. mindestens ein Vernetzerharz, welches ausgewählt ist aus der Gruppe bestehend aus Melaminharzen, geblockten Isocyanatharzen oder Mischungen daraus, und
c. mindestens ein Schmelzklebstoff auf Copolyamid-Basis enthält.

5. Primer-Zusammensetzung nach Anspruch 4, **dadurch gekennzeichnet, dass** die Zusammensetzung enthält
a. 8 - 23 Gew.-% mindestens eines Polymers B,
b. 1,5 - 15 Gew.-% mindestens eines Vernetzerharzes,
c. 10 - 40 Gew.-% mindestens eines Schmelzklebstoffs auf Copolyamid-Basis, und
d. 30 - 80 Gew.-% mindestens eines organischen Lösemittels,
jeweils bezogen auf das Gesamtgewicht des Primers, wobei sich die prozentualen Anteile aller Bestandteile zu 100 Gew.-% addieren.

6. Beschichtung umfassend mindestens eine Schicht der Haftvermittler-Zusammensetzung nach einem der Ansprüche 1 bis 3.

7. Beschichtung umfassend mindestens eine Schicht der Primer-Zusammensetzung nach einem der Ansprüche 4 oder 5.

8. Hybridbauteil umfassend Metall und Kunststoff, wobei das Metall mit dem Kunststoff zumindest durch eine Beschichtung nach einem der Ansprüche 6 oder 7 verbunden ist.

9. Verfahren zur Herstellung eines Hybridbauteils umfassend Metall und Kunststoff, **dadurch gekennzeichnet, dass**
a. mindestens eine Schicht der Haftvermittler-Zusammensetzung nach einem der Ansprüche 1 bis 3 auf das Metall aufgebracht wird,
b. die Zusammensetzung anschließend thermisch vernetzt wird und
c. danach der Kunststoff auf das beschichtete Metall aufgebracht und das Metall mit dem Kunststoff verbunden wird.

10. Verfahren zur Herstellung eines Hybridbauteils umfassend Metall und Kunststoff, **dadurch gekennzeichnet, dass**
a. mindestens eine Schicht der Primer-Zusammensetzung nach einem der Ansprüche 4 oder 5 auf das Metall aufgebracht wird,
b. die Primer-Zusammensetzung anschließend thermisch vernetzt wird,und
c. danach der Kunststoff auf das beschichtete Metall aufgebracht und das Metall mit dem Kunststoff verbunden wird.

11. Verfahren nach Anspruch 10, **dadurch gekennzeichnet, dass** auf die thermisch vernetzte Primer-Zusammensetzung mindestens eine Schicht einer Haftvermittler-Zusammensetzung aufgebracht wird und die Haftvermittler-Zusammensetzung thermisch vernetzt wird, bevor der Kunststoff auf das beschichtete Metall aufgebracht und das Metall mit dem Kunststoff verbunden wird.

12. Verfahren nach Anspruch 11, **dadurch gekennzeichnet, dass** eine Haftvermittler-Zusammensetzung nach einem der Ansprüche 1 bis 3 eingesetzt wird.

13. Verfahren nach einem der 9 bis 12, **dadurch gekennzeichnet, dass** der Kunststoff auf das beschichtete Metall durch Spritzgießen, Pressen, Laminieren, Hinterspritzen oder (Co-)Extrudieren aufgebracht wird.

14. Verwendung der Beschichtung gemäß einem der Ansprüche 6 oder 7 als Haftvermittler zwischen Metall und Kunststoff eines Hybridbauteils.

15. Metallsubstrat, beschichtet mit mindestens einer Primer-Zusammensetzung nach einem der Ansprüche 4 oder 5, mit mindestens einer Haftvermittler-Zusammensetzung nach einem der Ansprüche 1 bis 3 oder mit beidem.

## Claims

1. Adhesion promoter composition comprising
a. at least one polymer A selected from at least one epoxy resin-phenol resin precondensate, a mixture of at least one epoxy resin-phenol resin precondensate and epoxy resins, a mixture of epoxy resins and phenol resins, polyamide resins and mixtures thereof, and
b. at least one copolyamide-based hotmelt adhesive, wherein the hotmelt adhesive additionally comprises blocked polyisocyanates and an epoxy component.

2. Adhesion promoter composition according to Claim 1, **characterized in that** the composition comprises
a. 5% to 25% by weight of at least one polymer A,
b. 5% to 50% by weight of at least one copolyamide-based hotmelt adhesive, and
c. 30% to 80% by weight of at least one organic solvent,
based in each case on the total weight of the composition, where the percentages of all the constituents add up to 100% by weight.

3. Adhesion promoter composition according to either of the preceding claims, **characterized in that** the composition comprises at least one crosslinker resin selected from the group consisting of melamine resins, blocked isocyanate resins and mixtures thereof.

4. Primer composition comprising
a. at least one polymer B selected from saturated polyester resins, epoxy-phenol resin precondensates, mixtures of epoxy resins and phenol resins, and mixtures thereof,
b. at least one crosslinker resin selected from the group consisting of melamine resins, blocked isocyanate resins and mixtures thereof, and
c. comprises at least one copolyamide-based hotmelt adhesive.

5. Primer composition according to Claim 4, **characterized in that** the composition comprises
a. 8%-23% by weight of at least one polymer B,
b. 1.5%-15% by weight of at least one crosslinker resin,
c. 10%-40% by weight of at least one copolyamide-based hotmelt adhesive, and
d. 30%-80% by weight of at least one organic solvent,
based in each case on the total weight of the primer, where the percentages of all the constituents add up to 100% by weight.

6. Coating comprising at least one layer of the adhesion promoter composition according to any of Claims 1 to 3.

7. Coating comprising at least one layer of the primer composition according to either of Claims 4 and 5.

8. Hybrid component comprising metal and plastic, wherein the metal has been bonded to the plastic at least by a coating according to either of Claims 6 and 7.

9. Process for producing a hybrid component comprising metal and plastic, **characterized in that**
a. at least one layer of the adhesion promoter composition according to any of Claims 1 to 3 is applied to the metal,
b. the composition is then thermally crosslinked and
c. then the plastic is applied to the coated metal and the metal is bonded to the plastic.

10. Process for producing a hybrid component comprising metal and plastic, **characterized in that**
a. at least one layer of the primer composition according to either of Claims 4 and 5 is applied to the metal,
b. the primer composition is then thermally crosslinked and
c. then the plastic is applied to the coated metal and the metal is bonded to the plastic.

11. Process according to Claim 10, **characterized in that** at least one layer of an adhesion promoter composition is applied to the thermally crosslinked primer composition and the adhesion promoter composition is thermally crosslinked before the plastic is applied to the coated metal and the metal is bonded to the plastic.

12. Process according to Claim 11, **characterized in that** an adhesion promoter composition according to one of Claims 1 to 3 is used.

13. Process according to any of 9 to 12, **characterized in that** the plastic is applied to the coated metal by injection moulding, pressing, laminating, in-mould coating or (co-)extrusion.

14. Use of the coating according to either of Claims 6 and 7 as adhesion promoter between metal and plastic in a hybrid component.

15. Metal substrate coated with at least one primer composition according to either of Claims 4 and 5, with at least one adhesion promoter composition according to any of Claims 1 to 3, or with both.

## Revendications

1. Composition de promoteur d'adhérence, contenant
a. au moins un polymère A, qui est choisi parmi au moins un précondensat de résine époxyde-résine phénolique, un mélange d'au moins un précondensat de résine époxyde-résine phénolique et de résines époxyde, un mélange de résine époxyde et de résines phénoliques, de résines de polyamide ou de mélanges de ceux-ci et
b. au moins un adhésif fusible à base de copolyamide, l'adhésif fusible contenant en outre des polyisocyanates bloqués et un composant de type époxyde.

2. Composition de promoteur d'adhérence selon la revendication 1, **caractérisée en ce que** la composition contient
a. 5 à 25% en poids d'au moins un polymère A,
b. 5 à 50% en poids d'au moins un adhésif fusible à base de copolyamide et
c. 30 à 80% en poids d'au moins un solvant organique,
à chaque fois par rapport au poids total de la composition, la somme des proportions en pour cent de tous les constituants valant 100% en poids.

3. Composition de promoteur d'adhérence selon l'une quelconque des revendications précédentes, **caractérisée en ce que** la composition contient au moins une résine de réticulant qui est choisie dans le groupe constitué par les résines de mélamine, les résines bloquées d'isocyanate ou leurs mélanges.

4. Composition d'apprêt, contenant
a. au moins un polymère B, qui est choisi parmi les résines de polyester saturé, les précondensats d'époxyde-résine phénolique, les mélanges de résines époxyde et de résines phénoliques ainsi que leurs mélanges,
b. au moins une résine de réticulant qui est choisie dans le groupe constitué par les résines de mélamine, les résines bloquées d'isocyanate ou leurs mélanges et
c. contient au moins un adhésif fusible à base de copolyamide.

5. Composition d'apprêt selon la revendication 4, **caractérisée en ce que** la composition contient
a. 8-23% en poids d'au moins un polymère B,
b. 1,5-15% en poids d'au moins une résine de réticulant,
c. 10-40% en poids d'au moins un adhésif fusible à base de copolyamide et
d. 30-80% en poids d'au moins un solvant organique,
à chaque fois par rapport au poids total de l'apprêt, la somme des proportions en pour cent de tous les constituants valant 100% en poids.

6. Revêtement comprenant au moins une couche de la composition de promoteur d'adhérence selon l'une quelconque des revendications 1 à 3.

7. Revêtement comprenant au moins une couche de la composition d'apprêt selon l'une quelconque des revendications 4 ou 5.

8. Pièce de construction hybride comprenant du métal et un matériau synthétique, le métal étant relié au matériau synthétique au moins par un revêtement selon l'une quelconque des revendications 6 ou 7.

9. Procédé pour la production d'une pièce de construction hybride, comprenant du métal et un matériau synthétique, **caractérisé en ce que**
a. au moins une couche de la composition de promoteur d'adhérence selon l'une quelconque des revendications 1 à 3 est appliquée sur le métal,
b. la composition est ensuite réticulée thermiquement et
c. le matériau synthétique est ensuite appliqué sur le métal revêtu et le métal est relié au matériau synthétique.

10. Procédé pour la production d'une pièce de construction hybride, comprenant du métal et un matériau synthétique, **caractérisé en ce que**
a. au moins une couche de la composition d'apprêt selon l'une quelconque des revendications 4 à 5 est appliquée sur le métal,
b. la composition d'apprêt est ensuite réticulée thermiquement et
c. le matériau synthétique est ensuite appliqué sur le métal revêtu et le métal est relié au matériau synthétique.

11. Procédé selon la revendication 10, **caractérisé en ce qu'**au moins une couche d'une composition de promoteur d'adhérence est appliquée sur la composition thermiquement réticulée d'apprêt et la composition de promoteur d'adhérence est réticulée thermiquement avant l'application du matériau synthétique sur le métal revêtu et la liaison du métal avec le matériau synthétique.

12. Procédé selon la revendication 11, **caractérisé en ce qu'**une composition de promoteur d'adhérence selon l'une quelconque des revendications 1 à 3 est utilisée.

13. Procédé selon l'une quelconque des 9 à 12, **caractérisé en ce que** le matériau synthétique est appliqué sur le métal revêtu par moulage par injection, par pressage, par laminage, par injection par l'arrière ou par (co)extrusion.

14. Utilisation du revêtement selon l'une quelconque des revendications 6 ou 7 comme promoteur d'adhérence entre un métal et un matériau synthétique d'une pièce de construction hybride.

15. Substrat métallique, revêtu par au moins une composition d'apprêt selon l'une quelconque des revendications 4 ou 5, présentant au moins une composition de promoteur d'adhérence selon l'une quelconque des revendications 1 à 3 ou présentant les deux.
